# EUROPÄISCHE PATENTSCHRIFT

(11) **EP 2 221 224 B1**
(45) Veröffentlichungstag und Bekanntmachung des Hinweises auf die Patenterteilung: **15.07.2015**
(21) Anmeldenummer: 09002578.4
(22) Anmeldetag: 24.02.2009
(51) Int. Cl.: B60R 21/217, B60R 21/205

(54) **Gehäusebaugruppe für ein Luftsackmodul**
Housing assembly for an airbag module
Ensemble boîtier pour un module de coussin d'air

(43) Veröffentlichungstag der Anmeldung: 25.08.2010
(73) Patentinhaber: Autoliv Development AB, 447 83 Vårgårda (SE)
(72) Erfinder: Lutter, Gerhard, 16562 Bergfelde (DE); Crohn, Detlef, 13158 Berlin (DE)
(74) Vertreter: Schön, Thilo

(56) Entgegenhaltungen:
- WO-A-2008/068110
- WO-A-2009/051038
- GB-A- 2 323 572
- US-A- 5 393 090
- US-A- 5 806 879
- US-A1- 2006 220 355
- US-A1- 2007 164 542

## Beschreibung

Die vorliegende Erfindung betrifft eine Gehäusebaugruppe zur Aufnahme und Positionierung eines Luftsackmoduls an einer Armaturentafel gemäß dem Oberbegriff des Anspruchs 1, wie sie beispielsweise aus den Druckschriften US 5,806,879 A, WO 2008/068110 A oder US 5,393,090 A bekannt geworden ist.

Derartige Luftsackmodule, welche dazu dienen, um im Crashfall den Aufprall beispielsweise des Beifahrers und insbesondere dessen Knie auf die Armaturentafel abzufedern und zu dämpfen, sind üblicherweise in einem allseits geschlossenen starren Gehäusekasten auf der dem Fahrgastraum abgewandten Seite der Armaturentafel angeordnet. Aufgrund der Unterbringung in solch einem steifen bzw. starren Gehäusekasten, muss auf der dem Fahrgastraum abgewandten Seite ausreichend Bauraum zur Aufnahme des Gehäusekastens vorgesehen werden. Insbesondere muss auf der dem Fahrgastraum abgewandten Seite der Armaturentafel ausreichend Platz zur Verfügung stehen, um den starren Gehäusekasten überhaupt während der Montage an seine Endposition bringen zu können, so dass insgesamt verhältnismäßig viel Raum auf der Rückseite der Armaturentafel nur für die Unterbringung des Luftsackmoduls verloren geht. Da derartige starre Luftsackgehäusekästen außerdem in unerwünschter Weise aufgrund ihrer im Wesentlichen allseits geschlossenen Ausbildung das Gesamtgewicht eines Kraftfahrzeugs erhöhen, erweisen sich derartige bekannte Gehäusebaugruppen unter Verwendung starrer Gehäusekästen sowohl in kraftstoffwirtschaftlicher Hinsicht als auch in produktionswirtschaftlicher Hinsicht als unvorteilhaft.

Der Erfindung liegt daher die Aufgabe zugrunde, eine Gehäusebaugruppe zur Aufnahme und Positionierung eines Luftsackmoduls an einer Armaturentafel zu schaffen, mit der zumindest einem der zuvor genannten Probleme begegnet werden kann.

Erfindungsgemäß wird daher eine Gehäusebaugruppe zur Aufnahme und Positionierung eines Luftsackmoduls an der dem Fahrgastraum abgewandten Seite einer Armaturentafel vorgeschlagen, welche die Merkmale des Anspruchs 1 aufweist.

Die erfindungsgemäße Gehäusebaugruppe weist eine aus einem Gewebematerial gebildete Hülle zur Aufnahme eines zusammengefalteten Luftsacks sowie eine an der Armaturentafel derart anbringbare Rippentragstruktur auf, dass mit ihr die Luftsackhülle ortsfest zwischen der Armaturentafel und der Rippentragstruktur positionierbar ist. Die Rippentragstruktur kann sich dabei beispielsweise aus einer Vielzahl von Rippen zusammensetzen, indem die Rippentragstruktur unter Verwendung beispielsweise eines Spritzgussverfahrens aus beispielsweise einem Kunststoff oder Aluminium gefertigt ist.

Die Rippentragstruktur kommt dabei insbesondere deshalb zum Einsatz, um zu verhindern, dass der sich im Crashfall expandierende Luftsack auf der dem Fahrgastraum abgewandten Seite der Armaturentafel entfaltet.
Die Rippentragstruktur dient somit gewissermaßen als Positionierungshilfe und Widerlager für den Luftsack, so dass dieser im Crashfall zielgerichtet durch eine in der Armaturentafel ausgebildete Klappe in den Fahrgastraum eintreten und sich dort Entfalten kann.

Da sich die Rippentragstruktur aus einer Vielzahl von Rippen oder dünnen Stegen zusammensetzt, wird für die Herstellung der in Rede stehenden Rippentragstruktur im Unterschied zu den bekannten starren Luftsackgehäusekästen weniger Material benötigt, was sich aufgrund des durch das eingesparte Material reduzierten Gewichts sowohl in kraftstoffwirtschaftlicher als auch in produktionswirtschaftlicher Hinsicht als vorteilhaft erweist.

Darüber hinaus ist die Rippentragstruktur aufgrund der Tatsache, dass sie sich aus einer Vielzahl von Rippen zusammensetzt, innerhalb gewisser Grenzen elastisch verformbar, um beispielsweise während der Montage geringfügig gebogen, tordiert und/oder anderweitig verformt werden zu können. Dies ermöglicht es, dass weniger Platz benötigt wird, um die Gehäusebaugruppe und insbesondere deren Rippenstruktur während der Montage in ihre auf der Rückseite der Armaturentafel befindliche Endmontageposition bringen zu können.

Davon abgesehen kann es ausreichend sein, dass die Rippentragstruktur die Luftsackaufnahmehülle auf der der Armaturentafel abgewandten Seite nur bereichsweise um- bzw. hintergreift, womit nochmals weniger Material und Bauraum auf der Rückseite der Armaturentafel für die erfindungsgemäße Gehäusebaugruppe benötigt wird.

Erfindungsgemäß wird somit erstmals vorgeschlagen, den starren, geschlossenen Gehäusekasten eines Luftsackmoduls durch ein Gittergehäuse in Form der in Rede stehenden Rippentragstruktur zu ersetzen, wobei das zusammengefaltete Luftsackpaket in einer Gewebematerialhülle aufgenommen wird, die zusammen mit der Rippentragstruktur während des normalen Fahrbetriebs verhindert, dass die Faltung des Luftsacks verloren geht.

Vorteilhafte Ausführungsformen der erfindungsgemäßen Gehäusebaugruppe ergeben sich aus den Unteransprüchen, der Beschreibung sowie den Zeichnungen.

Wie bereits zuvor erwähnt wurde, ist die erfindungsgemäße Tragstruktur als Gittergehäuse ausgebildet. In diesem Falle ist es jedoch nicht unbedingt erforderlich, dass die Tragstruktur die den zusammengefalteten Luftsack aufnehmende Luftsackaufnahmehülle auf der dem Fahrgastraum abgewandten Seite der Armaturentafel vollständig umfangsseitig umgibt. Vielmehr kann es ausreichend sein, daß die Gitterstruktur die Luftsackaufnahmehülle nur auf ihrer der Armaturentafel abgewandten Seite hintergreift, so dass die Luftsackaufnahmehülle zwischen der Armaturentafel und der Gitterstruktur ortsfest positioniert ist.

Gemäß der Erfindung bildet die Tragstruktur - gegebenenfalls zusammen mit der Armaturentafel - eine Aufnahme für zumindest einen Teil der Luftsackaufnahmehülle. So kann die Tragstruktur beispielsweise gemäß einer besonders bevorzugten Ausführungsform zumindest in einem Querschnitt betrachtet eine im Wesentlichen U-förmige Gestalt aufweisen, so dass durch die beiden Schenkel der U-förmigen Tragstruktur verhindert werden kann, dass die einen zusammengefalteten Luftsack aufnehmende Luftsackaufnahmehülle beispielsweise infolge von Vibrationen während des laufenden Fahrbetriebs aus der von der Tragstruktur und der Armaturentafel gebildete Aufnahme seitlich herausrutscht.

Da es sich bei der Rippentragstruktur um ein von der Armaturentafel separat handhabbares Bauteil handelt, können an der Rippentragstruktur geeignete Aufnahmen oder Öffnungen vorgesehen sein, welche dazu dienen, um geeignete Befestigungsmittel zur Befestigung der Rippentragstruktur an der Armaturentafel aufnehmen zu können. So können beispielsweise am freien Ende zumindest eines Schenkels der U-förmigen Tragstruktur ein oder mehrere Öffnungen zur Aufnahme eines zur Anbringung der Tragstruktur an der Armaturentafel geeigneten Befestigungsmittels vorgesehen sein.

Bei diesen Befestigungsmitteln kann es sich beispielsweise um an der Rückseite der Armaturentafel angeformte Rasthaken handeln, welche formschlüssig in die an den freien Enden der Schenkel der U-förmigen Tragstruktur ausgebildete Öffnungen oder Aufnahmen einschnappen oder -rasten können. Alternativ dazu kann es sich bei den genannten Befestigungsmitteln auch beispielsweise um an der Rückseite der Armaturentafel vorgesehen Gewindestifte handeln, um so die Tragstruktur mit der Rückseite der Armaturentafel mit Hilfe von auf die Gewindestifte aufschraubbaren Muttern verschrauben zu können.

Da die Rippentragstruktur somit über die zuvor genannten Befestigungsmittel zugfest mit der Armaturentafel verbunden ist, dient die Tragstruktur als Widerlager für den sich während eines Crashfalls expandierenden Luftsack, da durch die Tragstruktur verhindert wird, dass sich der Luftsack auf der Rückseite der Armaturentafel ausdehnen kann. Durch die die Widerlagerfunktion der Tragstruktur wird somit sichergestellt, dass der sich expandierende Luftsack ausschließlich auf der der Armaturentafel zugewandten Seite ausdehnen und somit durch eine in der Armaturentafel ausgebildete Luftsackklappe ins Innere des Fahrgastraums eindringen und sich dort entfalten kann.

Gemäß noch einer weiteren Ausführungsform kann am freien Ende zumindest eines Schenkels der U-förmigen Tragstruktur ein zur Anlage an der Armaturentafel geeigneter Befestigungsflansch ausgebildet sein, in dem vorzugsweise die zumindest eine Öffnung für das Befestigungsmittel ausgebildet ist. Die Tragstruktur liegt somit vollflächig über die Flächen der Flansche an der Armaturentafel an, so dass die Kräfte, welche zur Befestigung der Tragstruktur an der Armaturentafel benötigt werden, gleichmäßig in die Armaturentafel eingeleitet werden können. Durch die gleichmäßige Krafteinleitung in die Armaturentafel kann somit sichergestellt werden, dass auf der dem Fahrgastraum zugewandten Seite der Armaturentafel nicht erkennbar ist, an welchen Stellen die in Rede stehenden Befestigungsmittel an der Rückseite der Armaturentafel angreifen.

Um die elektrische Verkabelung des Gasgenerators des von der Gehäusebaugruppe aufgenommenen Luftsackmoduls zu erleichtern, kann gemäß einer weiteren Ausführungsform in der Tragstruktur und vorzugsweise auch in der Luftsackaufnahmehülle eine Öffnung vorgesehen sein, welche eine auf die Gestalt des Gasgenerators komplementär abgestimmte Form aufweist. Die elektrischen Anschlüsse des Gasgenerators sind somit von der der Armaturentafel abgewandten Seite der Tragstruktur frei zugänglich, so dass nach erfolgter mechanischer Montage der Gehäusebaugruppe der Gasgenerator problemlos an die Bordelektronik des Fahrzeugs angeschlossen werden kann.

Um die mechanische Montage der Gehäusebaugruppe weiter zu erleichtern, kann der Gasgenerator des Luftsackmoduls gemäß einer weiteren Ausführungsform mit der Tragstruktur lösbar verbunden sein, und zwar vorzugsweise so, dass die Luftsackaufnahmehülle um den Umfang der darin ausgebildeten Gasgeneratoröffnung zwischen der Tragstruktur und dem Gasgenerator eingeklemmt ist. Durch die Befestigung des Gasgenerators an der Tragstruktur bilden diese beiden Bauteile somit eine einstückig handhabbare Einheit, welche zusammen mit der dazwischen eingeklemmten Luftsackaufnahmehülle als Ganzes montagefreundlich eingebaut werden kann.

Zwar kann die Luftsackaufnahmehülle gemäß den voranstehenden Erläuterungen zwischen der Tragstruktur und dem Gasgenerator eingeklemmt sein, wodurch diese drei Bauteile als Ganzes gemeinsam handhabbar sind. Da jedoch die Luftsackaufnahmehülle nur wenig formstabil ist, ist es gemäß einer weiteren bevorzugten Ausführungsform vorgesehen, dass die Luftsackaufnahmehülle an weiteren Stellen lösbar mit der Tragstruktur verbunden ist, und zwar vorzugsweise durch Verhakung der Luftsackaufnahmehülle mit an der Tragstruktur vorgesehenen Eingriffsmitteln. Hierdurch kann gewährleistet werden, dass die Luftsackaufnahmehülle während der Montage der Gehäusebaugruppe nicht in sich zusammenfällt, wodurch eine ordnungsgemäße Positionierung der Gehäusebaugruppe und insbesondere deren Luftsackaufnahmehülle an der Armaturentafel erschwert werden würde.

Gemäß einer weiteren Ausführungsform kann es sich in produktionswirtschaftlicher Hinsicht als vorteilhaft erweisen, die Luftsackaufnahmehülle durch einen Gewebeabschnitt des Luftsacks selbst zu bilden, so dass die Luftsackaufnahmehülle bereits während der Fertigung bzw. des Nähvorgangs des Luftsacks zusammen mit diesem gefertigt werden kann. So kann es sich beispielsweise bei der Luftsackaufnahmehülle um eine großzügig dimensionierte Gewebezugabe des Gewebematerials handeln, aus dem der Luftsack selbst gefertigt ist, so dass nach dem Nähvorgangs des Luftsacks derselbe in die Gewebezugabe eingeschlagen und mit dieser vernäht werden kann.

Da die Armaturentafel üblicherweise nicht als Last abtragendes Bauteil ausgebildet ist, ist es gemäß einer weiteren bevorzugten Ausführungsform vorgesehen, dass die Tragstruktur einen Befestigungsabschnitt aufweist, welcher derart ausgebildet ist, dass die Tragstruktur über den Befestigungsabschnitt mit einer von der Armaturentafel verkleideten Querträgerstruktur verbindbar ist. Während des normalen Fahrbetriebs lastet somit nicht das gesamte Gewicht der erfindungsgemäßen Gehäusebaugruppe auf der Armaturentafel sondern verteilt ihr Gewicht entsprechend den Steifigkeiten der Rippentragstruktur auf sowohl die Armaturentafel als auch die Querträgerstruktur. Somit wird insbesondere das Gewicht des verhältnismäßig schweren Gasgenerators in die Querträgerstruktur abgelastet, so dass von der Armaturentafel nur verhältnismäßig wenig Gewicht getragen werden muss. Die Befestigung der Gehäusebaugruppe an einer Querträgerstruktur erweist sich ferner dahingehend als vorteilhaft, dass dadurch die Druckkräfte, die während der Aktivierung des Luftsackmoduls auf die Armaturentafel einwirken, zumindest teilweise in Form von Zugkräften über die Befestigungsmittel, die Tragstruktur und deren Befestigungsabschnitt zurück in die Querträgerstruktur geleitet werden, wodurch eine unerwünschte Verformung der Armaturentafel verhindert wird.

Im Folgenden wird nun die erfindungsgemäße Gehäusebaugruppe rein exemplarisch anhand einer beispielhaften Ausführungsform unter Bezugnahme auf die beigefügten Zeichnungen beschrieben, wobei:
- Fig. 1: eine perspektivische Darstellung einer erfindungsgemäßen Gehäusebaugruppe zeigt;
- Fig. 2: eine Untersicht der in der Fig. 1 dargestellten Gehäusebaugruppe zeigt; und
- Fig. 3: eine Frontalansicht der in der Fig. 1 dargestellten Gehäusebaugruppe zeigt.

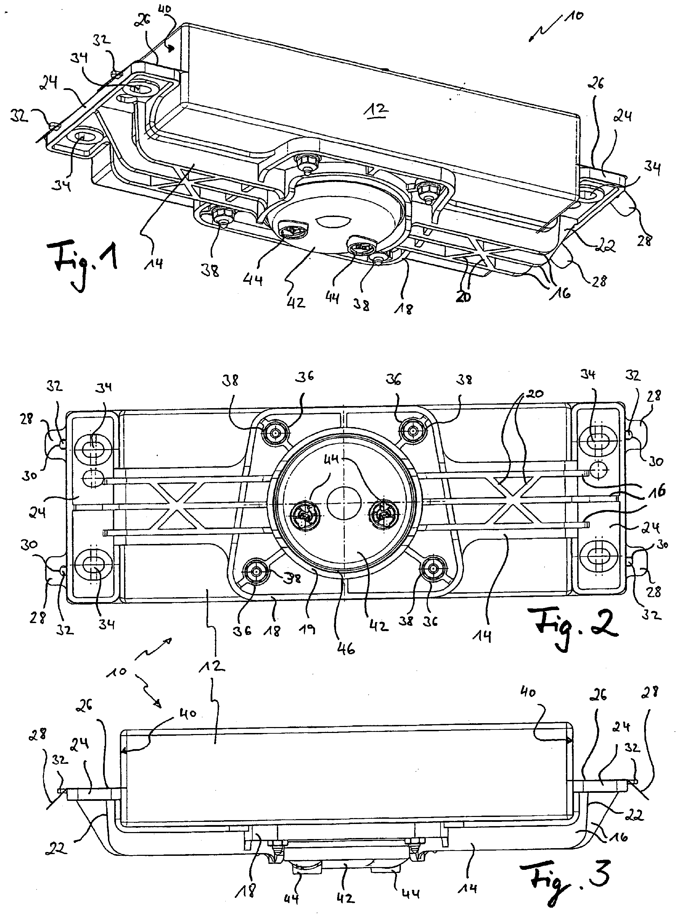

Im Folgenden wird nun unter im Wesentlichen gleichzeitiger Bezugnahme auf die Fig. 1 bis 3 eine Ausführungsform der erfindungsgemäßen Gehäusebaugruppe im Detail beschrieben. Wie am besten den Fig. 1 und 3 entnommen werden kann, weist die erfindungsgemäße Gehäusebaugruppe 10 ein aus einem Gewebematerial gefertigtes Gehäuse 12 auf, welches im Rahmen der vorliegenden Erfindung auch als Luftsackaufnahmehülle bezeichnet wird, da dieses dazu dient, im Inneren einen zusammengefalteten Luftsack (nicht dargestellt) aufzunehmen. Die Luftsackaufnahmehülle 12 ist dabei aus einem Gewebematerial zusammengenäht und weist in der dargestellten Ausführungsform eine im Wesentlichen längliche quaderförmige Gestalt auf, wobei entlang ihrer sich gegenüberliegenden Kurzseiten 40 jeweils ein Gewebeflansch 26 vorgesehen ist, auf dessen Funktionszweck später noch genauer eingegangen wird.

Zusätzlich zu der Luftsackaufnahmehülle 12 weist die erfindungsgemäße Gehäusebaugruppe 10 ferner eine Rippentragstruktur 14 auf, welche sich aus einer Vielzahl von Rippen 16 oder dünnen Stegen zusammensetzt. In der dargestellten Ausführungsform weist die Rippentragstruktur 14 drei im Wesentlichen parallel zueinander verlaufende Rippen 16 auf, welche untereinander durch sich kreuzende Querverstrebungen oder -rippen 20 verbunden sind. Darüber hinaus weist die Rippentragstruktur 14 in der dargestellten Ausführungsform in einem mittleren Bereich eine trapezförmig umlaufende Rippe 18 auf, welche zusammen mit einer kreisförmig umlaufenden Rippe 19, welche sich innerhalb der trapezförmigen Rippe 18 befindet, eine Mittelauflagefläche für die Luftsackaufnahmehülle 12 bildet. Die Luftsackaufnahmehülle 12 liegt somit entlang der drei längs verlaufenden Tragrippen 16 sowie im Bereich des durch die trapezförmige Rippe 18 sowie die darin einbeschriebene kreisförmige Rippe 19 gebildeten Auflagebereichs auf der Rippentragstruktur 14 auf, so dass lediglich die Eckbereiche der Luftsackaufnahmehülle 12 keine Unterstützung durch die Rippentragstruktur 14 erfahren. Eine derartige Unterstützung der genannten Eckbereiche ist jedoch auch nicht unbedingt erforderlich, da die Luftsackaufnahmehülle 12 in Verbindung mit dem von ihr aufgenommenen Luftsack eine ausreichende Eigenstabilität aufweist, um ein Durchsacken der Eckbereiche der Luftsackaufnahmehülle 12 nach unten zu verhindern.

Wie den Darstellungen der Fig. 1 und 2 entnommen werden kann, ist innerhalb der kreisförmigen Rippe 19 ein Gasgenerator 42 angeordnet, welcher sich durch die durch die kreisförmige Rippe 19 gebildete Öffnung 46 in der Tragstruktur 14 sowie durch eine damit fluchtende Öffnung in der Luftsackaufnahmehülle 12 in dieselbe hinein erstreckt, um den darin befindlichen Luftsack (nicht dargestellt) im Crashfall mit Gasen beaufschlagen zu können. Der Gasgenerator 42 ist dabei entlang eines um ihn umlaufenden Flansches (nicht dargestellt) mit der Tragstruktur 14 und insbesondere mit vier radial zwischen der trapezförmigen Rippe 18 und der kreisförmigen Rippe 19 verlaufenden Rippen in einem Aufweitungsbereich 36 derselben verschraubt, so dass die aus der Rippentragstruktur 14 und dem Gasgenerator 42 gebildete Einheit zu Zwecken der Montage gemeinsam handhabbar ist. Insbesondere kommt dabei die Luftsackaufnahmehülle 12 um den Umfang der darin ausgebildeten Gasgeneratoraufnahmeöffnung zwischen der Tragstruktur 14 und dem Gasgenerator 42 bzw. dessen Flansch zu liegen, so dass die Luftsackaufnahmehülle 12 zwischen dem Gasgenerator 42 und der Rippentragstruktur 14 eingeklemmt ist und somit ebenfalls gemeinsam mit dem Gasgenerator 42 sowie der Luftsackaufnahmehülle 12 gehandhabt werden kann.

Wie der Zusammenschau der Fig. 1 und 3 entnommen werden kann, weist die Tragstruktur 14 im Querschnitt betrachtet (Fig. 3) eine im Wesentlichen flache U-förmige Gestalt auf, wobei an den beiden freien Enden der Schenkel 22 der U-förmigen Tragstruktur 14 jeweils ein die drei Rippen verbindender Befestigungsflansch 24 ausgebildet ist, wobei jeder dieser Befestigungsflansche 24 zwei Öffnungen 34 aufweist, welche dazu dienen, um an der Rückseite der Armaturentafel vorgesehene Befestigungsmittel wie beispielsweise Rasthaken oder Gewindestifte zu Zwecken der Befestigung der Rippentragstruktur 14 an der Armaturentafel aufnehmen zu können.

Zwar besteht aufgrund der zuvor erläuterten Eigenstabilität der Luftsackaufnahmehülle 12 grundsätzlich keine Gefahr, dass die nicht unterstützten Eckbereiche der Luftsackaufnahmehülle 12 nach unten durchhängen. Um die Gefahr eines derartigen Durchhängens jedoch weiter zu reduzieren, sind an den den Kurzseiten 40 der Luftsackaufnahmehülle 12 gegenüberliegenden Längsseiten der Befestigungsflansche 24 jeweils zwei Dorne 32 einstückig mit den Befestigungsflanschen 24 ausgebildet, an denen die Gewebeflansche 26 mit Hilfe von am freien Ende der Gewebeflansche 26 ausgebildeten Gewebelaschen 28 eingehakt werden können. Dadurch, dass die Dorne 32 durch die Ösen 30 der Gewebelaschen 28 hindurchragen, wird somit die quaderförmige Luftsackhülle 12 in Längsrichtung an der Rippentragstruktur 14 gesichert, wodurch effektiv verhindert werden kann, dass die vier Eckbereiche der Luftsackaufnahmehülle 12 nach unten durchhängen können.

Wie den voranstehenden Ausführungen entnommen werden kann, bildet die Rippentragstruktur 14 der erfindungsgemäßen Gehäusebaugruppe 10 eine Aufnahme für die Luftsackaufnahmehülle 12, wobei die Rippentragstruktur 14 aufgrund ihrer auf Zug wirksamen Verbindung über die hier nicht dargestellten Befestigungsmittel mit der Armaturentafel ein Widerlager für die Kräfte darstellt, die während des Expandierens des von der Luftsackaufnahmehülle 12 aufgenommenen Luftsacks auf die Rippentragstruktur 14 ausgeübt werden. Die Rippentragstruktur 14 verhindert somit effektiv, dass sich der Luftsack im Crashfall in Richtung der der Armaturentafel abgewandten Seite ausdehnen kann. Vielmehr wird durch die Rippentragstruktur 14 gewährleistet, dass sich der Luftsack nur in Richtung der Armaturentafel ausdehnen kann, wodurch ein genau vorhersagbares und reproduzierbares Öffnungsverhalten der in der Armaturentafel ausgebildeten Luftsackklappe sichergestellt werden kann.

Die erfindungsgemäße Gehäusebaugruppe erweist sich jedoch insbesondere dahingehend als vorteilhaft, dass sie durch die filigran aufgebaute Rippentragstruktur im Vergleich zu bekannten starren Luftsackgehäusekästen mit deutlich weniger Material auskommt, was sich aufgrund des eingesparten Gewichts sowohl in kraftstoffwirtschaftlicher Hinsicht als auch in produktionswirtschaftlicher Hinsicht als vorteilhaft erweist.

Darüber hinaus ist die erfindungsgemäße Gehäusebaugruppe zumindest in gewissen Grenzen elastisch verformbar, wodurch für den Einbau derselben weniger Platz benötigt wird. Insbesondere ist die Luftsackaufnahmehülle innerhalb gewisser Grenzen zusammendrückbar, so dass die erfindungsgemäße Gehäusebaugruppe auch bei sehr beengten Platzverhältnissen zum Einsatz kommen kann.

### Bezugszeichenliste

- 10: Gehäusebaugruppe
- 12: Luftsackaufnahmehülle
- 14: Rippentragstruktur
- 16: Rippen
- 18: trapezförmige Rippe
- 19: kreisförmige Rippe
- 20: Querverstrebung
- 22: Schenkel
- 24: Befestigungsflansche
- 26: Gewebeflansch
- 28: Gewebelasche
- 30: Ösen
- 32: Dorne
- 34: Öffnungen für Befestigungsmittel
- 36: Rippenaufweitung mit Öffnungen
- 38: Verschraubung
- 40: Kurzseite von 12
- 42: Gasgenerator
- 44: elektrische Anschlüsse
- 46: Öffnung

## Patentansprüche

1. Gehäusebaugruppe (10) zur Aufnahme und Positionierung eines Luftsackmoduls an einer Armaturentafel, umfassend:
- eine aus einem Gewebematerial gebildete Hülle (12) zur Aufnahme eines zusammengefalteten Luftsacks;
**gekennzeichnet durch**
- eine als Gitterstruktur ausgebildete Rippentragstruktur (14), die eine Aufnahme für zumindest einen Teil der Luftsackaufnahmehülle (12) bildet und an der Armaturentafel derart anbringbar ist, dass mit ihr die Luftsackaufnahmehülle (12) zwischen der Armaturentafel und der Rippentragstruktur (14) ortsfest positionierbar ist.

2. Gehäusebaugruppe nach Anspruch 1,
**dadurch gekennzeichnet, dass**
die Tragstruktur (14) zumindest in einem Querschnitt betrachtet eine im Wesentlichen U-förmige Gestalt aufweist.

3. Gehäusebaugruppe nach Anspruch 2,
**dadurch gekennzeichnet, dass**
am freien Ende zumindest eines Schenkels (22) der U-förmigen Tragstruktur (14) eine Öffnung (34) zur Aufnahme eines zur Anbringung der Tragstruktur (14) an der Armaturentafel geeigneten Befestigungsmittels vorgesehen ist.

4. Gehäusebaugruppe nach Anspruch 2 oder 3,
**dadurch gekennzeichnet, dass**
am freien Ende zumindest eines Schenkels (22) der U-förmigen Tragstruktur (14) ein zur Anlage an der Armaturentafel geeigneter Befestigungsflansch (24) ausgebildet ist, in dem vorzugsweise die zumindest eine Öffnung (34) für das Befestigungsmittel ausgebildet ist.

5. Gehäusebaugruppe nach zumindest einem der vorstehenden Ansprüche,
**dadurch gekennzeichnet, dass**
in der Tragstruktur (14) und vorzugsweise auch in der Luftsackaufnahmehülle (12) eine Öffnung vorgesehen ist, welche eine auf die Gestalt eines Gasgenerators (42) des von der Gehäusebaugruppe (10) aufzunehmenden Luftsackmoduls komplementär abgestimmte Form aufweist.

6. Gehäusebaugruppe nach zumindest einem der vorstehenden Ansprüche,
**dadurch gekennzeichnet, dass**
der Gasgenerator (42) des Luftsackmoduls mit der Tragstruktur (14) verbunden ist, und zwar vorzugsweise so, dass die Luftsackaufnahmehülle (12) um den Umfang der darin ausgebildeten Gasgeneratoraufnahmeöffnung zwischen der Tragstruktur (14) und dem Gasgenerator (42) eingeklemmt ist.

7. Gehäusebaugruppe nach zumindest einem der vorstehenden Ansprüche,
**dadurch gekennzeichnet, dass**
die Luftsackaufnahmehülle (12) lösbar mit der Tragstruktur (14) verbunden ist, vorzugsweise durch Verhakung der Luftsackaufnahmehülle (12) mit an der Tragstruktur (14) vorgesehenen Eingriffsmitteln (32).

8. Gehäusebaugruppe nach zumindest einem der vorstehenden Ansprüche,
**dadurch gekennzeichnet, dass**
die Luftsackaufnahmehülle (12) durch einen Gewebeabschnitt des Luftsacks selbst gebildet wird.

9. Gehäusebaugruppe nach zumindest einem der vorstehenden Ansprüche,
**dadurch gekennzeichnet, dass**
die Tragstruktur (14) einen Befestigungsabschnitt aufweist, welcher derart ausgebildet ist, dass die Tragstruktur (14) über den Befestigungsabschnitt mit einer von der Armaturentafel verkleideten Querträgerstruktur verbindbar ist.

10. Luftsackbaugruppe mit einer Gehäusebaugruppe (10) nach zumindest einem der vorstehenden Ansprüche, wobei die Tragstruktur (14) einen Gasgenerator (42) trägt, der sich zumindest teilweise im Inneren der Luftsackaufnahmehülle zum Aufblasen eines von der Luftsackaufnahmehülle (12) aufgenommenen Luftsacks erstreckt.

## Claims

1. A housing subassembly (10) for receiving and positioning of an airbag module on a dashboard, comprising:
- a casing (12) formed from a fabric material for receiving a folded-together airbag; **characterised by**
- a rib-support structure (14) configured as a lattice structure, which forms a receptacle for at least one part of the airbag-receiving casing (12) and is applyable to the dashboard such that using it the airbag-receiving casing (12) is positionable in a stationary manner between the dashboard and the rib-support structure (14).

2. The housing subassembly according to claim 1,
**characterised in that**
at least viewed in a cross-section the support structure (14) has a substantially U-shaped design.

3. The housing subassembly according to claim 2,
**characterised in that**
at the free end at least of one arm (22) of the U-shaped support structure (14) an opening (34) for receiving an attachment means suitable for applying the support structure (14) to the dashboard is provided.

4. The housing subassembly according to claim 2 or 3,
**characterised in that**
at the free end of at least one arm (22) of the U-shaped support structure (14) an attachment flange (24) suitable for abutment on the dashboard is formed, wherein the at least one opening (34) for the attachment means is preferably formed.

5. The housing subassembly according to at least one of the preceding claims,
**characterised in that**
an opening is provided in the support structure (14) and preferably also in the airbag-receiving casing (12), which opening has a shape complementarily adapted to the design of a gas generator (42) of the airbag module to be received by the housing subassembly (10).

6. The housing subassembly according to at least one of the preceding claims,
**characterised in that**
the gas generator (42) of the airbag module is connected to the support structure (14), and in fact preferably such that around the circumference of the gas-generator-receiving opening formed in the airbag-receiving casing (12) the airbag-receiving casing (12) is clamped between the support structure (14) and the gas generator (42).

7. The housing subassembly according to at least one of the preceding claims,
**characterised in that**
the airbag-receiving casing (12) is releasably connected to the support structure (14), preferably by hooking of the airbag-receiving casing (12) to engagement means (32) provided on the support structure (14).

8. The housing subassembly according tot at least one of the preceding claims,
**characterised in that**
the airbag-receiving casing (12) is formed by a fabric section of the airbag itself.

9. The housing subassembly according to at least one of the preceding claims,
**characterised in that**
the support structure (14) includes an attachment section, which is configured such that the support structure (14) is connectable to a crossmember structure, covered by the dashboard, via the attachment section.

10. An airbag subassembly including a housing subassembly (10) according to at least one of the preceding claims, wherein the support structure (14) supports a gas generator (42) which extends at least partially in the interior of the airbag-receiving casing for the inflating of an airbag received by the airbag-receiving casing (12).

## Revendications

1. Ensemble boîtier (10) destiné au logement et à la mise en place d'un module de coussin gonflable dans un tableau de bord, comprenant :
- une enveloppe constituée d'une matière tissée (12) destinée au logement d'un coussin gonflable plié ;
**caractérisé par**
- une structure de support nervurée (14) conçue sous la forme d'une structure ajourée qui constitue un logement pour au moins une partie de l'enveloppe de logement de coussin gonflable (12) et qui peut être agencée dans le tableau de bord de manière à permettre un positionnement fixe de l'enveloppe de logement de coussin gonflable (12) entre le tableau de bord et la structure de support nervurée (14).

2. Ensemble boîtier selon la revendication 1,
**caractérisé en ce que**
la structure de support (14) présente, vue au moins en coupe transversale, une forme sensiblement en U.

3. Ensemble boîtier selon la revendication 2,
**caractérisé en ce qu'**
il est prévu, à l'extrémité libre d'au moins un côté (22) de la structure de support (14) en forme de U, une ouverture (34) destinée au logement d'un moyen de fixation adapté pour agencer la structure de support (14) dans le tableau de bord.

4. Ensemble boîtier selon la revendication 2 ou 3,
**caractérisé en ce qu'**
une bride de fixation (24) permettant un agencement dans le tableau de bord est formée à l'extrémité libre d'au moins un côté (22) de la structure de support (14) en forme de U, l'au moins une ouverture (34) destinée au moyen de fixation étant de préférence conçue dans ladite bride de fixation.

5. Ensemble boîtier selon l'une au moins des revendications précédentes,
**caractérisé en ce qu'**
il est prévu une ouverture dans la structure de support (14) de même que, de préférence, dans l'enveloppe de logement de coussin gonflable (12), laquelle ouverture présente une forme complémentaire à celle d'un générateur de gaz (42) du module de coussin gonflable destiné à loger dans l'ensemble boîtier (10).

6. Ensemble boîtier selon l'une au moins des revendications précédentes,
**caractérisé en ce que**
le générateur de gaz (42) du module de coussin gonflable est relié à la structure de support (14) et ce, de préférence, de manière que l'enveloppe de logement de coussin gonflable (12) soit bloquée entre la structure de support (14) et le générateur de gaz (42) autour de la circonférence de l'ouverture de logement du générateur de gaz qui y est pratiquée.

7. Ensemble boîtier selon l'une au moins des revendications précédentes,
**caractérisé en ce que**
l'enveloppe de logement de coussin gonflable (12) est reliée à la structure de support (14) de manière amovible, de préférence par accrochage de l'enveloppe de logement de coussin gonflable (12) sur des moyens d'assujettissement (32) prévus sur la structure de support (14).

8. Ensemble boîtier selon l'une au moins des revendications précédentes,
**caractérisé en ce que**
l'enveloppe de logement de coussin gonflable (12) est formée par une section de tissu du coussin gonflable lui-même.

9. Ensemble boîtier selon l'une au moins des revendications précédentes,
**caractérisé en ce que**
la structure de support (14) présente une section de fixation conçue de manière que la structure de support (14) puisse être reliée à une structure de support transversale sous l'habillage du tableau de bord par le biais de la section de fixation.

10. Ensemble de coussin gonflable comportant un ensemble boîtier (10) selon l'une au moins des revendications précédentes, dans lequel la structure de support (14) porte un générateur de gaz (42) qui pénètre, au moins en partie, à l'intérieur de l'enveloppe de logement de coussin gonflable afin de gonfler un coussin gonflable logeant dans l'enveloppe de logement de coussin gonflable (12).
